# EUROPEAN PATENT APPLICATION

(11) **EP 3 313 059 A1**
(43) Date of publication of application: **25.04.2018**
(21) Application number: 17196433.1
(22) Date of filing: 13.10.2017
(51) Int. Cl.: H04N 5/225, H04N 7/14, H04N 5/262, H04N 5/232

(54) **ELECTRONIC DEVICE WITH DISPLAY-BASED IMAGE COMPENSATION AND CORRESPONDING SYSTEMS AND METHODS**

(30) Priority: 21.10.2016 US 201615331763
(71) Applicant: Motorola Mobility LLC, Chicago, IL 60654 (US)
(72) Inventor: MCLAUGHLIN, Michael, San Jose, CA 95129 (US)
(74) Representative: Openshaw & Co.

(57) **Abstract**

An electronic device includes a housing. A display is supported by the housing. An imager is proximately located with the display. One or more processors, operable with the display and the imager, alter a presentation of content of the display when the imager captures an image. This can include turning OFF light emitting diodes of the display, presenting an image filtering presentation on the display, or presenting an image compensation presentation on the display. The presentation can also be altered while the imager meters received light.

## Description

### BACKGROUND

### TECHNICAL FIELD

This disclosure relates generally to electronic devices, and more particularly to electronic devices having image capture devices.

### BACKGROUND ART

Electronic devices, such as mobile telephones, smart phones, portable computers, gaming devices, and the like, are used by billions of people. These owners use mobile communication devices for many different purposes including, but not limited to, voice communications and data communications for text messaging, Internet browsing, commerce such as banking, and social networking.

Many electronic communication devices include image capture devices. For example, most every smartphone or tablet computer sold today comes with at least one digital camera. Similarly, many digital cameras now come with electronic communication devices so that images can be transferred to computers or other electronic devices. Most users prefer a "point and click" picture taking process in which one button press captures beautiful, distortion free images. Even those users preferring to set the equivalent of aperture and shutter speed settings desire images that are distortion free. It would be advantageous to have an improved electronic device that improves image quality.

### BRIEF DESCRIPTION OF THE DRAWINGS

FIG. 1 illustrates an exploded view of one explanatory electronic device in accordance with one or more embodiments of the disclosure.
FIG. 2 illustrates a schematic block diagram of one explanatory electronic device in accordance with one or more embodiments of the disclosure.
FIG. 3 illustrates one explanatory electronic device in accordance with one or more embodiments of the disclosure.
FIG. 4 illustrates another explanatory electronic device in accordance with one or more embodiments of the disclosure.
FIG. 5 illustrates yet another explanatory electronic device in accordance with one or more embodiments of the disclosure.
FIG. 6 illustrates a user using one explanatory electronic device in accordance with one or more embodiments of the disclosure.
FIG. 7 illustrates a user using one explanatory electronic device in accordance with one or more embodiments of the disclosure.
FIG. 8 illustrates a user using one explanatory electronic device in accordance with one or more embodiments of the disclosure.
FIG. 9 illustrates a user using one explanatory electronic device in accordance with one or more embodiments of the disclosure.
FIG. 10 illustrates a user using one explanatory electronic device in accordance with one or more embodiments of the disclosure.
FIG. 11 illustrates one explanatory method in accordance with one or more embodiments of the disclosure.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present disclosure.

### DETAILED DESCRIPTION OF THE DRAWINGS

Before describing in detail embodiments that are in accordance with the present disclosure, it should be observed that the embodiments reside primarily in combinations of method steps and apparatus components related to controlling a display to apply image compensation in an electronic device. Any process descriptions or blocks in flow charts should be understood as representing modules, segments, or portions of code that include one or more executable instructions for implementing specific logical functions or steps in the process.

Embodiments of the disclosure do not recite the implementation of any commonplace business method aimed at processing business information, nor do they apply a known business process to the particular technological environment of the Internet. Moreover, embodiments of the disclosure do not create or alter contractual relations using generic computer functions and conventional network operations. Quite to the contrary, embodiments of the disclosure employ methods that, when applied to electronic device and/or user interface technology, improve the functioning of the electronic device itself by and improving the overall user experience to overcome problems specifically arising in the realm of the technology associated with electronic device user interaction.

Alternate implementations are included, and it will be clear that functions may be executed out of order from that shown or discussed, including substantially concurrently or in reverse order, depending on the functionality involved. Accordingly, the apparatus components and method steps have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

It will be appreciated that embodiments of the disclosure described herein may be comprised of one or more device-specific processors and unique stored program instructions that control the one or more processors to implement, in conjunction with certain non-processor circuits, some, most, or all of the functions of altering the presentation of a display when an imager captures an image to improve image quality as described herein. The non-processor circuits may include, but are not limited to, a radio receiver, a radio transmitter, signal drivers, clock circuits, power source circuits, and user input devices. As such, these functions may be interpreted as steps of a method to either control the display of an electronic device to improve image quality. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Thus, methods and means for these functions have been described herein. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ASICs with minimal experimentation.

Embodiments of the disclosure are now described in detail. Referring to the drawings, like numbers indicate like parts throughout the views. As used in the description herein and throughout the claims, the following terms take the meanings explicitly associated herein, unless the context clearly dictates otherwise: the meaning of "a," "an," and "the" includes plural reference, the meaning of "in" includes "in" and "on." Relational terms such as first and second, top and bottom, and the like may be used solely to distinguish one entity or action from another entity or action without necessarily requiring or implying any actual such relationship or order between such entities or actions. Also, reference designators shown herein in parenthesis indicate components shown in a figure other than the one in discussion. For example, talking about a device (10) while discussing figure A would refer to an element, 10, shown in figure other than figure A.

Embodiments of the disclosure provide methods and systems for controlling the display of an electronic device to improve image quality. In one or more embodiments, an electronic device includes an imager that is proximately located with a display. For example, the imager may be adjacent to the display, collocated with the display, or disposed near enough to the display that light from the display is able to reflect from the fascia of the electronic device or otherwise be captured by the imager. As used herein, "proximately located" means that the imager is located at a location where light from the display, when the display is ON, is received by the imager.

Since the imager receives light from the display, whether it be by reflection from the fascia of the electronic device or by other methods, in one or more embodiments one or more processors of the electronic device are operable to alter a presentation of the display when the imager captures an image to improve overall image quality. Illustrating by example, in one embodiment the light emitting elements of the display are simply turned OFF so that stray light from the display is not received by the imager while the imager captures an image.

In other embodiments, other image compensation techniques can be applied to images by altering the presentation of the display. For instance, in one embodiment the display presentation will be altered to present an image filtering presentation on the display. If the user wants an image captured through a rose colored filter, for example, while the imager captures the image the display may present a rose color. Since the imager and the display are proximately located, some of that rose colored light will spill into the imager, thereby providing an image filtering affect.

In still other embodiments, the display presentation will be altered to present an image compensation presentation on the display. If, for example, the imager detects noise or other undesirable qualities of an image, one or more processors of the electronic device may operate to improve image quality. Illustrating by example, the one or more processors may detect what is being presented on the display and in the area of the imager's field of view at the time the image is captured of capture, and then provide optical processing to subtract out that "light," which constitutes noise during image capture, to reveal an improved quality of a subject being captured. Videos can be treated in similar fashion. Moreover, the image compensation presentations and the image filtering presentations can be time varying to compensate for changing qualities of a scene as well.

Embodiments of the disclosure can be used to improve the qualities of both still images and video. Where multiple images are captured, as is the case when capturing video, the altered presentation of the display can even change on a frame-by-frame basis, as well as during the capture of each frame. For instance, in one embodiment, the presentation of the display can be altered simply by turning OFF light emitting elements of the display. However, in another embodiment an image presentation that subtracts the elements presented on the display from elements seen by the imager can improve image quality. Such an image presentation can provide compensating affects for noise and other distortion, such as that caused by ambient light in a room or light reflected from a person's skin or clothing and so forth. In such an embodiment, rather than turning OFF the display, strategic actuation of the display works to improve image quality.

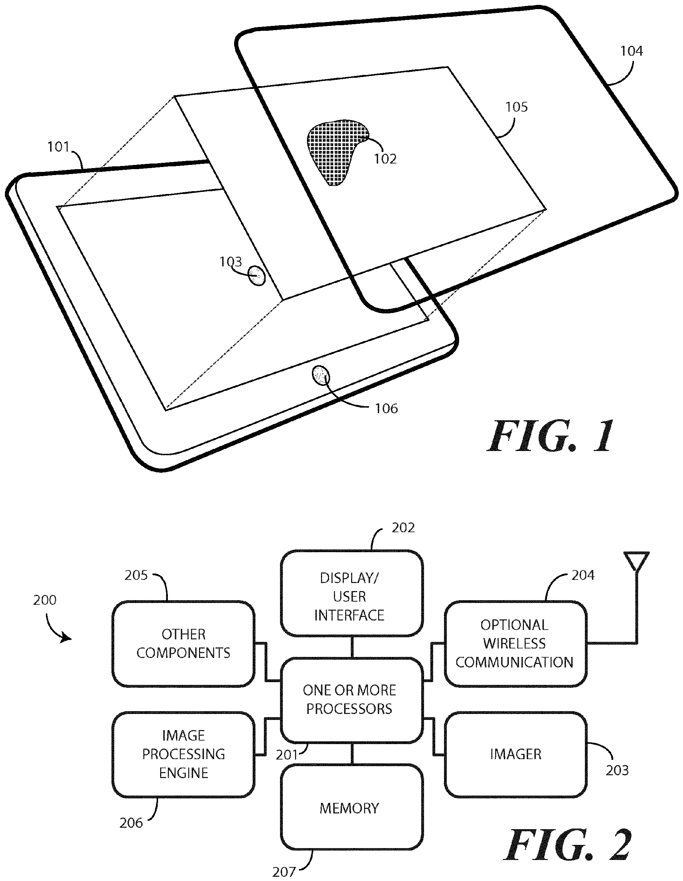

Turning now to FIG. 1, illustrated therein is one e explanatory electronic device 100 configured in accordance with one or more embodiments of the disclosure. The electronic device 100 of FIG. 1 is a portable electronic device, and is shown as a tablet computer for illustrative purposes. However, it should be obvious to those of ordinary skill in the art having the benefit of this disclosure that other electronic devices may be substituted for the explanatory smart phone of FIG. 1. For example, the electronic device 100 could equally be a conventional desktop computer, a digital camera, a palm-top computer, a smartphone, a gaming device, a media player, or other device. The electronic device 100 could also be a wearable device, such as a smart watch, pendant, or other wearable device.

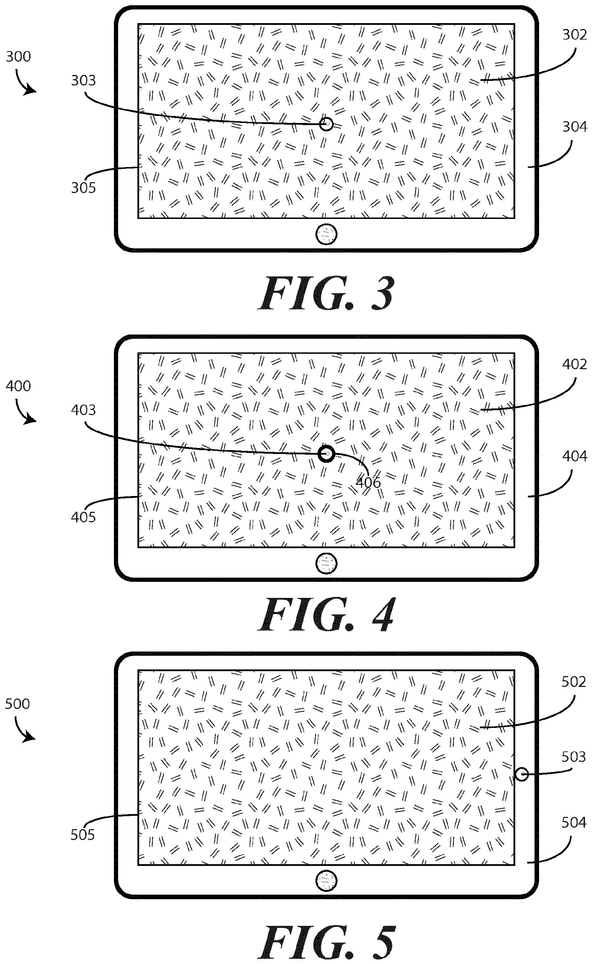

This illustrative electronic device 100 is shown in FIG. 1 in a partially exploded view so that various components can more clearly be seen. The electronic device 100 includes a housing 101, a display 102, an imager 103, and a fascia 104. In this illustrative embodiment, the imager 103 and the display 102 are collocated due to the fact that the imager 103 is disposed beneath the display. To accommodate the collocated positioning, in this illustrative embodiment the display comprises an active matrix organic light emitting diode (AMOLED) display that is fabricated on an optically transparent substrate 105. However, it should be noted that other types of displays employing transparent substrates will be obvious to those of ordinary skill in the art having the benefit of this disclosure. Some examples of these other displays will be described below with reference to FIGS. 3-5.

Starting from the top, a fascia 104 is provided. In this illustrative embodiment, the fascia 104 defines a major face of the housing 101 disposed above the display. The fascia 104 may be manufactured from glass or a thin film sheet. The fascia 104 is a covering or housing, which may or may not be detachable. Suitable materials for manufacturing the cover layer include clear or translucent plastic film, glass, plastic, or reinforced glass. Reinforced glass can comprise glass strengthened by a process such as a chemical or heat treatment. The fascia 104 may also include a ultra-violet barrier. Such a barrier is useful both in improving the visibility of display 102 and in protecting internal components of the electronic device 100.

Printing may be desired on the front face of the fascia 104 for various reasons. For example, a subtle textural printing or overlay printing may be desirable to provide a translucent matte finish atop the fascia 104. Such a finish is useful to prevent cosmetic blemishing from sharp objects or fingerprints. The fascia 104 can include a plurality of indium tin oxide or other electrodes, which function as a capacitive sensor, to convert the display 102 to a touch-sensitive display. Where configured to be touch sensitive, users can deliver user input to the display 102 by delivering touch input from a finger, stylus, or other objects disposed proximately with the display.

Beneath the fascia 104 is disposed the display 102. The display 102 is supported by the housing 101 of the electronic device 100. In one embodiment, the display 102 comprises an organic light emitting diode display fabricated on an optically transparent substrate as noted above. However, other configurations of the display 102 will be described below with reference to FIGS. 3-5.

Beneath the display 102 is the imager 103. In one embodiment, the imager 103 comprises a digital camera. The imager could alternatively comprise multiple cameras that are proximately disposed with the display 102. Where multiple cameras are used as the imager 103, these cameras can be oriented along the electronic device 100 spatially in various ways. Illustrating by example, in one embodiment the cameras can be clustered near one another, e.g., near the center of the display 102 or the housing 101 of the electronic device 100. In another embodiment, the cameras can be oriented spatially across the surface area defined by the display 102, e.g., with one camera in the center and four other cameras, with one camera disposed in each of the four corners of the housing 101. Where multiple cameras are used, the one or more processors can capture and record the reflected light received by each camera from the display 102. The one or more processors can then use this information to modify the levels of the display output, e.g., color intensity and color balance, as a function of pixel locations on the display 102to brighten dark corners (relative to the center), align consistent color balance, and so forth, thereby improving image quality in a real time, closed-loop feedback system.

In one embodiment, the imager 103 is capable of each of metering scenes to adjust its settings, capturing images, and previewing images. When images are captured, the captured image is recorded to memory. When images are previewed, the images are delivered to the one or more processors of the electronic device for presentation on the display 102. When previewing images, the images can either be temporarily written to memory or delivered directly to the display 102 as electronic signals with only temporary buffering occurring in the one or more processors.

In this illustrative embodiment, the imager is disposed beneath the optically transparent substrate 105 of the display 102. Since the substrate 105 is optically transparent in this embodiment, the imager 103 can capture images through the display 102 regardless of the state of the display 102, i.e., whether the display 102 is presenting images or not. However, since the imager 103 and the display 102 are collocated in this embodiment, light from the display 102 can reflect from the fascia 104 to the imager 103 when the imager 103 is capturing images. Advantageously, embodiments of the disclosure provides methods and systems where the presentation of the display can be altered while the imager 103 captures images to enhance image quality. This will be explained in more detail below.

This explanatory electronic device 100 also includes a housing 101. Features can be incorporated into the housing 101. Examples of such features include a microphone or speaker port. In this illustrative embodiment, a user interface component 106, which may be a button or touch sensitive surface, can also be disposed along the housing 101 as shown in FIG. 1.

Turning now to FIG. 2, illustrated therein is a schematic block diagram 200 of an explanatory electronic device configured in accordance with one or more embodiments of the disclosure. In one embodiment, the electronic device includes one or more processors 201. The one or more processors 201 are operable with the display 202 and other components of the electronic devices configured in accordance with embodiments of the disclosure. The one or more processors 201 can include a microprocessor, a group of processing components, one or more ASICs, programmable logic, or other type of processing device. The one or more processors 201 can be operable with the various components of the electronic devices configured in accordance with embodiments of the disclosure. The one or more processors 201 can be configured to process and execute executable software code to perform the various functions of the electronic devices configured in accordance with embodiments of the disclosure.

A storage device, such as memory 207, can optionally store the executable software code used by the one or more processors 201 during operation. The memory 207 may include either or both static and dynamic memory components, may be used for storing both embedded code and user data. The software code can embody program instructions and methods to operate the various functions of the electronic device devices configured in accordance with embodiments of the disclosure, and also to execute software or firmware applications and modules. The one or more processors 201 can execute this software or firmware, and/or interact with modules, to provide device functionality.

In this illustrative embodiment, the schematic block diagram 200 also includes an optional communication circuit 204 that can be configured for wired or wireless communication with one or more other devices or networks. The networks can include a wide area network, a local area network, and/or personal area network. Examples of wide area networks include GSM, CDMA, W-CDMA, CDMA-2000, iDEN, TDMA, 2.5 Generation 3GPP GSM networks, 3rd Generation 3GPP WCDMA networks, 3GPP Long Term Evolution (LTE) networks, and 3GPP2 CDMA communication networks, UMTS networks, E-UTRA networks, GPRS networks, iDEN networks, and other networks.

The communication circuit 204 may also utilize wireless technology for communication, such as, but are not limited to, peer-to-peer or ad hoc communications such as HomeRF, Bluetooth and IEEE 802.11 (a, b, g or n); and other forms of wireless communication such as infrared technology. The communication circuit 204 can include wireless communication circuitry, one of a receiver, a transmitter, or transceiver, and one or more antennas.

The one or more processors 201 can also be operable with other components 205. The other components 205 can include an acoustic detector, such as a microphone. The other components 205 can also include one or more proximity sensors to detect the presence of nearby objects. The other components 205 may include video input components such as optical sensors, mechanical input components such as buttons, touch pad sensors, touch screen sensors, capacitive sensors, motion sensors, and switches. Similarly, the other components 205 can include output components such as video, audio, and/or mechanical outputs. Other examples of output components include audio output components such as speaker ports or other alarms and/or buzzers and/or a mechanical output component such as vibrating or motion-based mechanisms. The other components 205 may further include an accelerometer to show vertical orientation, constant tilt and/or whether the device is stationary.

The one or more processors 201 can be responsible for performing the primary functions of the electronic devices configured in accordance with one or more embodiments of the disclosure. For example, in one embodiment the one or more processors 201 comprise one or more circuits operable with one or more user interface devices, which can include the display 202, to present presentation information to a user. The executable software code used by the one or more processors 201 can be configured as one or more modules that are operable with the one or more processors 201. Such modules can store instructions, control algorithms, and so forth. In one embodiment, the modules include an image-processing engine 206. In one embodiment, the image-processing engine 206 comprises software stored in the memory 207. However, in another embodiment the image-processing engine 206 can comprise hardware components or firmware components integrated into the one or more processors 201 as well.

In one or more embodiments, the image-processing engine 206 is operable with the imager 203. The image-processing engine 206, in one embodiment, can recognize a particular feature in an image received by the imager 203. The image-processing engine 206 can receive electrical signals from the imager 203 and can process the signals to detect various parameters occurring in the image, including the dynamic-range of one or more frames associated with an image for a particular scene, the luminance ratio of the brightest element in a given scene to the darkest element in the given scene, modulated light data of one or more frames associated with an image for a particular scene, spatial features of one or more frames associated with an image for a particular scene, colors of one or more frames associated with an image for a particular scene, hues of one or more frames associated with an image for a particular scene, distortion of one or more frames associated with an image for a particular scene, undesirable characteristics of one or more frames associated with an image for a particular scene, motion of one or more frames associated with an image for a particular scene, reflections of one or more frames associated with an image for a particular scene, and other parameters.

In one or more embodiments, the image-processing engine 206 can include a distortion detection module. The image-processing engine 206 can detect distortion or other unwanted characteristics in an image captured by the imager 203. This detection can occur in numerous ways. In one or more embodiments, the image-processing engine 206 can detect one or more of out of balance conditions, flash, flare, blur, haze, out-of-focus condition, combinations thereof, or other distortion or unwarranted characteristics.

Illustrating by example, the image-processing engine 206 can assess sharpness of lines and other delineations occurring in the image to detect blur, haze, out-of-focus conditions, or other visible distortion. Similarly, the image-processing engine 206 can determine a threshold noise level occurring in an image, or can determined an amount of jitter occurring in an image by performing a pixel shifting process to determine whether the jitter falls below a predefined jitter difference threshold to detect distortion. Other distortion techniques will be obvious to those of ordinary skill in the art having the benefit of this disclosure.

In one embodiment, the one or more processors 201 may generate commands based on the amount of undesirable qualities detected in an image by the image-processing engine 206. For example, the one or more processors 201 may actuate, deactuate, or otherwise control the display 202 to alter a presentation of the display 202 while the imager 203 is capturing an image to improve the overall image quality. In one embodiment, the one or more processors 201 can alter the presentation of the display 202 by turning OFF light emitting elements, which are dioides in the case of an organic light emitting diode display.

In another embodiment, the one or more processors 201 can alter the presentation of the display 202 by presenting an image filtering presentation on the display 202. The image presented to provide the filtering presentation can be a function of parameters or techniques, such as filter selection or modeling, based upon information received from the image-processing engine 206 when the imager 203 is metering a scene. In one or more embodiments, the image filtering presentation can include colors or brightness levels that provide light to the imager 203 that filters pixels of an image as a function of a transmission map associated with the image defined by the image-processing engine. For example, the image-processing engine 206 can compensate for identified scene radiance, reflections, flaring, and other unwanted characteristics.

In yet another embodiment, the one or more processors 201 can alter the presentation of the display 202 by presenting an image compensation presentation on the display. Illustrating by example, the image-processing engine 206 can identify an index of distortion or unwanted characteristics appearing in an image. Based upon this index, the one or more processors 201 can present a counter image on the display 202 that is in tended to mitigate, counter, or reduce this distortion or these unwanted characteristics. A light reflection module that estimates how much light from the display 202 reflects from the fascia or is otherwise directed to the imager 203 can be used to vary color, intensity, pattern, and time-varying optical characteristics of the image compensation presentation. The image compensation presentation can be presented in combination with the image filtering presentation in some embodiments.

The examples provided above offer only a glimpse of the myriad of image filtering presentations and image compensation presentations that can appear on the display 202 while the imager 203 is capturing an image. Weighted maps, Laplacian adjustment scales, or other techniques could be used to determine image filtering presentations and image compensation presentations. Still other techniques will be obvious to those of ordinary skill in the art having the benefit of this disclosure. Additionally, it should be noted that these effects can be applied one or both of when the imager 203 captures an image or when the imager 203 meters an image, i.e., when the imager 203 meters received light.

It is to be understood that FIG. 1 is provided for illustrative purposes only and for illustrating components of explanatory electronic devices configured in accordance with one or more embodiments of the disclosure, and is not intended to be a complete schematic diagram of the various components required for an electronic device. Therefore, other electronic devices in accordance with embodiments of the disclosure may include various other components not shown in FIG. 2, or may include a combination of two or more components or a division of a particular component into two or more separate components, and still be within the scope of the present disclosure.

Turning now to FIG. 3, illustrated therein is another electronic device 300 configured in accordance with one or more embodiments of the disclosure. The electronic device 300 includes a housing 301. The housing 301 comprises a fascia 304. In one embodiment, the fascia 304 defines a major face of the housing 301.

In this illustrative embodiment, a display 302 is fabricated on an optically transparent substrate 305. The optically transparent substrate 305 is supported by the housing 301 and is disposed interior of the fascia 304 in this embodiment. An imager 303 is collocated located with the display 302. In this illustrative embodiment, the display 302 is disposed between the imager 303 and the fascia 304.

One or more processors, disposed within the housing 301, are operable with the display 302 and the imager 303. In one embodiment, the one or more processors are configured to alter a presentation of the display 302 when the imager 303 captures an image or meters received light associated with a scene. For example, in one embodiment the one or more processors alter the presentation of the display 302 by turning OFF light emitting diodes of the display 302. In another embodiment, the one or more processors alter the presentation of the display 302 by presenting an image filtering presentation on the display 302. In yet another embodiment, the one or more processors alter the presentation of the display 302 by presenting an image compensation presentation on the display 302.

Turning now to FIG. 4, illustrated therein is another electronic device 400 configured in accordance with one or more embodiments of the disclosure. The electronic device 400 includes a housing 401. The housing 401 comprises a fascia 404. In one embodiment, the fascia 404 defines a major face of the housing 401.

In this illustrative embodiment, the display 402 is fabricated on a substrate 405 that need not be optically transparent. In this embodiment, the substrate 405 defines an aperture 406. The imager 403 is axially aligned, i.e., concentrically aligned as viewed in FIG. 4, with the aperture 406. In this configuration, the imager 403 can receive light through the aperture 406 when capturing an image or when metering received light associated with a scene.

One or more processors, disposed within the housing 401, are operable with the display 402 and the imager 403. In one embodiment, the one or more processors are configured to alter a presentation of the display 402 when the imager 403 captures an image or meters received light associated with a scene. For example, in one embodiment the one or more processors alter the presentation of the display 402 by turning OFF light emitting diodes of the display 402. In another embodiment, the one or more processors alter the presentation of the display 402 by presenting an image filtering presentation on the display 402. In yet another embodiment, the one or more processors alter the presentation of the display 402 by presenting an image compensation presentation on the display 402.

Turning now to FIG. 5, illustrated therein is yet another electronic device 500 configured in accordance with one or more embodiments of the disclosure. The electronic device 500 includes a housing 501. The housing 501 comprises a fascia 504. In one embodiment, the fascia 504 defines a major face of the housing 501.

In this illustrative embodiment, the display 502 is fabricated on a substrate 505 that need not be optically transparent. The imager 503 is proximately located with the display 502, which means that the imager 503 is located at a location where light from the display 502, when the display is ON, is received by the imager 503. In this illustrative embodiment, the imager 503 is adjacent to the display 502.

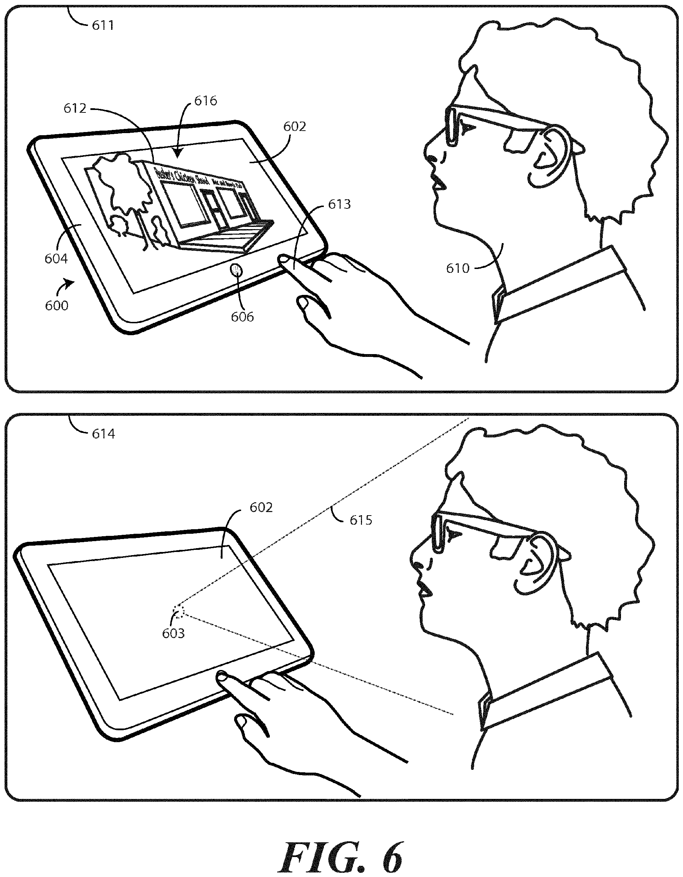

Since the imager 503 can receive light from the display 502, whether it be by reflection from the fascia 504 of the electronic device 500 or by other methods, in one or more embodiments one or more processors of the electronic device 500 are operable to alter a presentation of the display 502 when the imager 503 captures an image to improve overall image quality. In one embodiment, the one or more processors are configured to alter a presentation of the display 502 when the imager 503 captures an image or meters received light associated with a scene. For example, in one embodiment the one or more processors alter the presentation of the display 502 by turning OFF light emitting diodes of the display 502. In another embodiment, the one or more processors alter the presentation of the display 502 by presenting an image filtering presentation on the display 502. In yet another embodiment, the one or more processors alter the presentation of the display 502 by presenting an image compensation presentation on the display 502. Turning now to FIGS. 6-10, examples of these display presentation altering techniques will be illustrated.

Beginning with FIG. 6, at 611 a user 610 is using an electronic device 600 configured in accordance with one or more embodiments of the disclosure. The electronic device 600 includes a display 602 that is fabricated on an optically transparent substrate 605. An imager (not shown) is collocated located with the display 602. In this illustrative embodiment, the display 602 is disposed between the imager and the fascia 604.

At 611, a first presentation 616 appears on the display 602. In this example, one or more processors of the electronic device 600 are presenting content 612 on the display 602 as the presentation 616. In this illustrative example, the content 612 is a picture of Buster's Chicken Shack and Mac and Henry's Pub. Since the user 610 recently had a wonderful meal at Buster's Chicken Shack, he elects to take a "selfie" by actuating the camera and touching the control button 606 with his finger 613. He will then post the picture to the social media site Buster has set up to promote the chicken shack.

Embodiments of the disclosure contemplate that where the imager is collocated with the display 602 or otherwise disposed near enough to the display 602 that light used to present the content 612 from the display is able to reflect from the fascia 604 of the electronic device 600 or otherwise be captured by the imager, distortion or other unwanted visual artifacts can appear in the image. This would be undesirable to the user 610, as his five-star review of Buster's Chicken Shack could be compromised with a less than stellar picture.

Since the imager can receive light from the display 602 when it is presenting content 612, whether it be by reflection from the fascia 604 of the electronic device 600 or by other methods, in one or more embodiments one or more processors of the electronic device 600 are operable to alter a presentation of the display 602 when the imager captures the selfie of the user 610 to improve overall image quality. In this illustrative embodiment, to prevent light from the content 612 from reaching the imager, the one or more processors alter the presentation of the display 602 by turning OFF light emitting elements of the display 602.

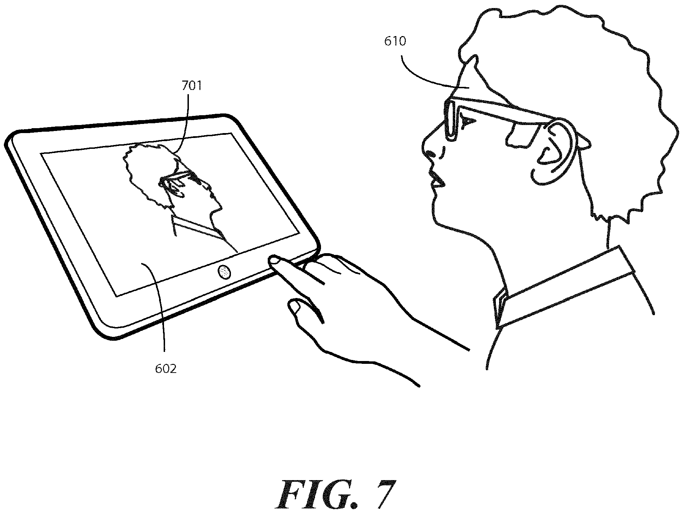

As shown at 614, the one or more processors have turned the light emitting elements of the display 602 OFF as the imager 603 captures the image 615 of the user 610. This precludes light from the display 602 from being redirected to the imager 603 and compromising the image. As shown in FIG. 7, the selfie 701 turned out true and clear, without artifacts from the content (612) that was previously presented on the display 602. Once the user 610 is done examining the selfie 701 and posting it to Buster's site, the one or more processors, in one embodiment, again present the first image presentation, i.e., the content (612), on the display 602 after the imager (603) captures the image (615).

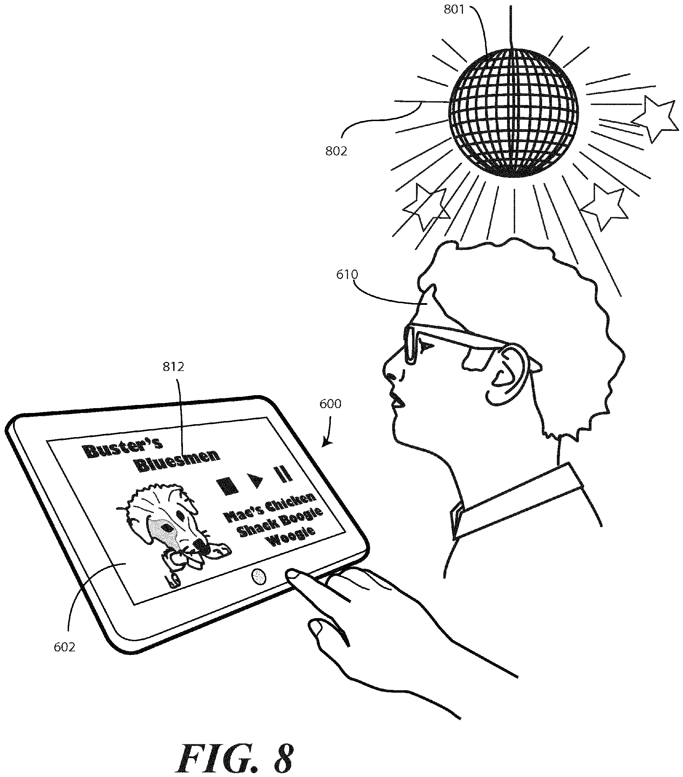

Turning now to FIG. 8, the user 610 is again using the electronic device 600 configured in accordance with one or more embodiments of the disclosure. Here, the electronic device 600 is functioning in a music player mode. One or more processors of the electronic device 600 are presenting content 812 on the display 602. In this illustrative example, the user 610 is jamming to the sweet sounds of Buster and his Bluesmen playing the Chicken Shack Boogie Woogie. To experience the music, as opposed to simply hearing it, the user has turned on his trusty disco ball 801, which emits large beams of light 802 and other optical effects. While these are great for the music, they can compromise images captured by the imager. Being such a fan of Buster's Chicken Shack, the user 610 wants to take a second selfie showing himself dancing, which he will then post to the social media site to show how big a fan he is of Buster.

Embodiments of the disclosure contemplate that while content 812 presented on the display can reflect to the imager, in some instances greater distortion or unwanted characteristics will come from the environment. While it is desirable to capture the disco ball 801 in the image, undesirable optical effects may compromise the selfie, resulting in a less than stellar picture.

Since the imager can receive light 802 from the disco ball 801, which can create distortion, in one or more embodiments one or more processors of the electronic device 600 are operable to alter a presentation of the display 602 when the imager captures the selfie of the user 610 to improve overall image quality. In this illustrative embodiment, to mitigate the effects of the light 802 from the disco ball 801, the one or more processors alter the presentation of the display 602 by presenting an image compensation presentation on the display 602.

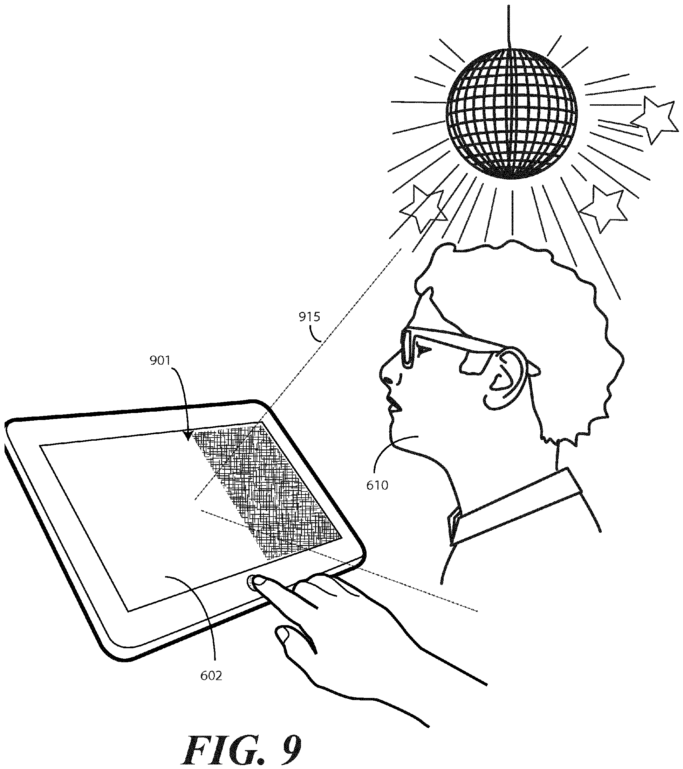

Turning to FIG. 9, the one or more processors are presenting the image compensation presentation 901 on the display 602 while the imager captures the image 915 of the user 610. Since the disco ball 801 is to the right of the user 610, the right side of the display 602 is turned black, while the left side of the display 602 is white. This will soften the right side of the image while enhancing the left side of the image to compensate for those undesirable qualities. As noted above, the image compensation presentation 901 can take other forms as well. If a scene is too warm, the presentation of cool colors can mitigate the same. Moreover, the image compensation presentations and the image filtering presentations can be time varying to compensate for changing qualities of a scene as well. Still other image compensation presentations will be obvious to those of ordinary skill in the art having the benefit of this disclosure.

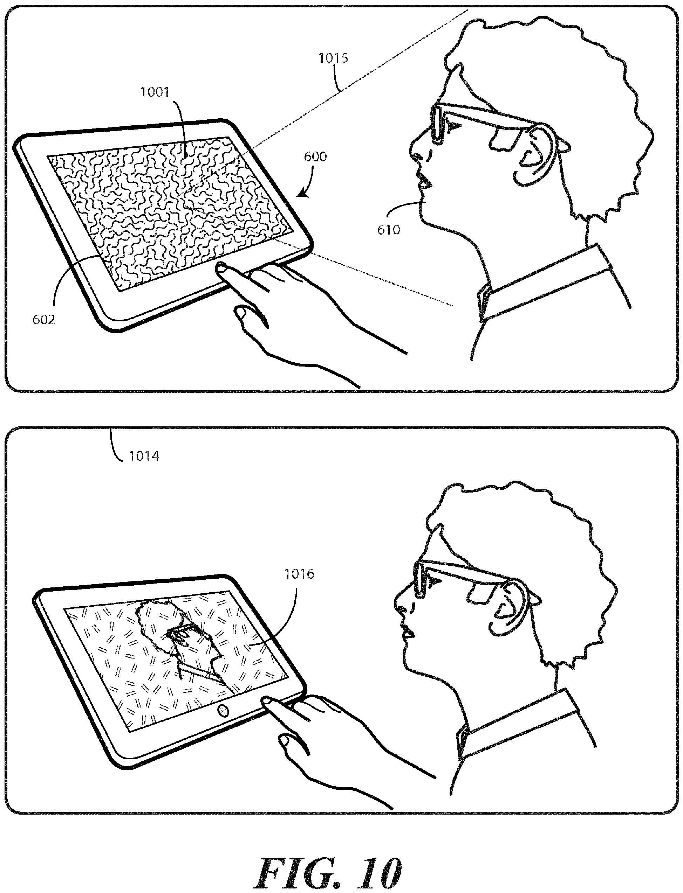

Turning now to FIG. 10, the user 610 is ready for a blind date. He needs to text his date a photograph so she will know who he is when they meet at a restaurant. However, he is aware that sometimes sharp reflections from his sometimes reduce the quality of his photographs. Accordingly, he wishes to mitigate those negative effects.

Embodiments of the disclosure allow him to do that by employing an image filtering application. When active, one or more processors of the electronic device 600 alter the presentation of the display 602 by presenting an image filtering presentation 1001 on the display 602 while the imager is capturing an image 1015 of the user 610. Here, the image filtering presentation 1001 is a blue screen that softens the reflections from the user's skin. However, other image filtering presentations can be used as well. If the user 610 wants an image captured through a rose colored filter, for example, while the imager captures the image 1015 the display 602 may present a rose color. Since the imager and the display 602 are proximately located, some of that rose colored light will spill into the imager, thereby providing an image compensation affect. Other image filtering presentations will be obvious to those of ordinary skill in the art having the benefit of this disclosure. As shown at 1014, a filtered image 1016 results.

While electronic image processing can be used to apply virtual filters, filtering as shown in FIG. 10 has certain advantages. In contrast to simply making the image more "blue" or more "rose colored," the method illustrated in FIG. 10 is advantageously able to correct for white-balance, which may be affected by electronic devices such as a two-tone flash or multi-tone flash. The display 602 can present a color to adjust or otherwise compensate for the light environment.

The techniques of FIGS. 6-10 can be used to improve the qualities of both still images and video. While still images were used as examples, with static image filtering presentations and image compensation presentations, these techniques can be applied to multiple images as well. Additionally, the image filtering presentation and image compensation presentations can be time-varying as well, either across images or during single images. For instance, in one embodiment, the presentation of the display can be altered simply by turning OFF light emitting elements of the display. However, in another embodiment an image presentation that subtracts the elements presented on the display from elements seen by the imager can improve image quality. Such an image presentation can provide compensating affects for noise and other distortion, such as that caused by ambient light in a room or light reflected from a person's skin or clothing and so forth. In such an embodiment, rather than turning OFF the display, strategic actuation of the display works to improve image quality.

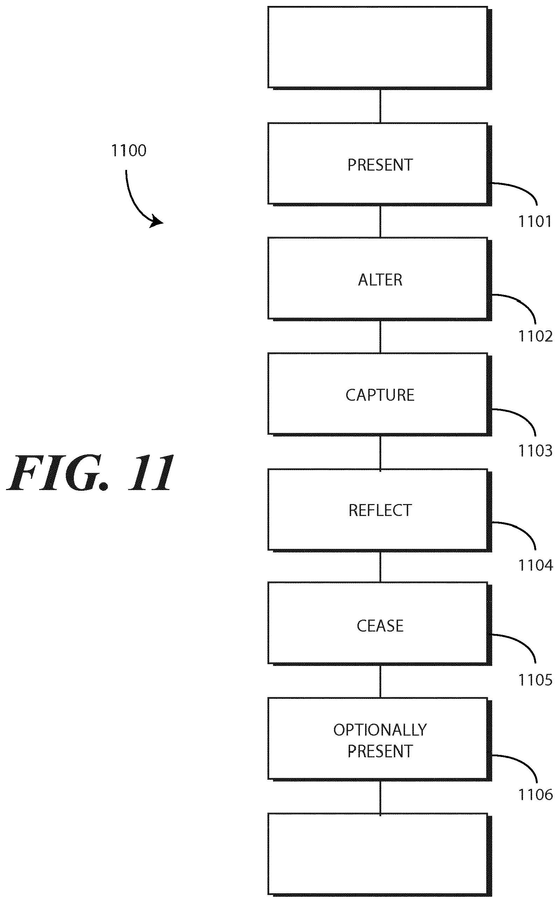

Turning now to FIG. 11, illustrated therein is one explanatory method 1100 in accordance with one or more embodiments of the disclosure. Beginning at step 1101, one or more processors of an electronic device present a first image presentation on a display of the electronic device.

At step 1102, the one or more processors alter the display by causing it to present a second image presentation. In one embodiment, the second image presentation of step 1102 comprises an absence of light emission by the display. In another embodiment, the second image presentation of step 1102 comprises an image compensation presentation. In yet another embodiment, the second image presentation of step 1102 comprises an image filtering presentation.

At step 1103, the one or more processors cause an imager to capture an image. In one or more embodiments, step 1102 and step 1103 occur concurrently to improve image quality. In one or more embodiments, this concurrent operation causes a reflecting, at step 1104, of at least a portion of the second image presentation from a fascia to the imager.

At step 1105, the one or more processors cease presentation of the second image presentation after the imager captures the image. At optional step 1106, the one or more processors can again present the first image presentation on the display after the imagers captures the image.

In the foregoing specification, specific embodiments of the present disclosure have been described. However, one of ordinary skill in the art appreciates that various modifications and changes can be made without departing from the scope of the present disclosure as set forth in the claims below. Thus, while preferred embodiments of the disclosure have been illustrated and described, it is clear that the disclosure is not so limited. Numerous modifications, changes, variations, substitutions, and equivalents will occur to those skilled in the art without departing from the spirit and scope of the present disclosure as defined by the following claims. Accordingly, the specification and figures are to be regarded in an illustrative rather than a restrictive sense, and all such modifications are intended to be included within the scope of present disclosure. The benefits, advantages, solutions to problems, and any element(s) that may cause any benefit, advantage, or solution to occur or become more pronounced are not to be construed as a critical, required, or essential features or elements of any or all the claims.

Further aspects of the invention are provided by the subject matter of the following clauses:
1. An electronic device, comprising:
   a housing comprising a fascia defining a major face of the housing;
   a display fabricated on an optically transparent substrate supported by the housing and disposed interior of the fascia;
   an imager, collocated located with the display, wherein the display is disposed between the imager and the fascia; and
   one or more processors operable with the display and the imager, the one or more processors altering a presentation of the display when the imager captures an image.
2. The electronic device of clause 1, the one or more processors altering the presentation of the display by turning OFF light emitting diodes of the display.
3. The electronic device of clause 1 or clause 2, the one or more processors altering the presentation of the display by presenting an image filtering presentation on the display.
4. The electronic device of any of clauses 1 to 3, the one or more processors altering the presentation of the display by presenting an image compensation presentation on the display.
5. The electronic device of any of clauses 1 to 4, the one or more processors also altering the presentation of the display while the imager meters received light.

## Claims

1. An electronic device, comprising:
a housing;
a display supported by the housing;
an imager proximately located with the display; and
one or more processors operable with the display and the imager, the one or more processors altering a presentation of the display when the imager captures an image.

2. The electronic device of claim 1, wherein the imager and the display are collocated.

3. The electronic device of claim 1 or claim 2, the display fabricated on a substrate defining an aperture, the imager axially aligned with the aperture so as to receive light through the aperture when capturing the image.

4. The electronic device of any of claims 1 to 3, the display comprising an organic light emitting diode display fabricated on an optically transparent substrate.

5. The electronic device of claim 4, wherein the imager comprises one or more imagers, further comprising a fascia defining a major face of the housing above the display, wherein the one or more imagers are disposed beneath the optically transparent substrate.

6. The electronic device of any of claims 1 to 5, the one or more processors altering the presentation of the display by turning OFF light emitting diodes of the display.

7. The electronic device of any of claims 1 to 6, the one or more processors altering the presentation of the display by presenting an image filtering presentation on the display.

8. The electronic device of any of claims 1 to 7, the one or more processors altering the presentation of the display by presenting an image compensation presentation on the display.

9. The electronic device of any of claims 1 to 8, the one or more processors also altering the presentation of the display while the imager meters received light.

10. An electronic device, comprising:
a housing comprising a fascia defining a major face of the housing;
a display fabricated on an optically transparent substrate supported by the housing and disposed interior of the fascia;
an imager, collocated located with the display, wherein the display is disposed between the imager and the fascia; and
one or more processors operable with the display and the imager, the one or more processors altering a presentation of the display when the imager captures an image.

11. A method, comprising:
presenting, with one or more processors, a first image presentation on a display of an electronic device;
concurrently causing, with the one or more processors, an imager to capture an image while altering the display to present a second image presentation; and
ceasing, with the one or more processors, presentation of the second image presentation after the imager captures the image.

12. The method of claim 11, wherein the second image presentation comprises an absence of light emission by the display.

13. The method of claim11 or 12, wherein the second image presentation comprises an image compensation presentation.

14. The method of any of claims 11 to 13, wherein the second image presentation comprises an image filtering presentation.

15. The method of any of claims 11 to 14, further comprising reflecting at least a portion of the second image presentation from a fascia to the imager.

16. The method of any of claims 11 to 15, further comprising again presenting the first image presentation on the display after the imager captures the image.
